# EUROPEAN PATENT SPECIFICATION

(11) **EP 2 496 063 B1**
(45) Date of publication and mention of the grant of the patent: **30.07.2014**
(21) Application number: 10828615.4
(22) Date of filing: 25.10.2010
(51) Int. Cl.: A01C 7/04, A01C 7/08

(54) **A SOWING METHOD FOR AN AGRICULTURAL MACHINE AND A DEVICE TO PERFORM SAID METHOD**
SAATVERFAHREN FÜR EINE LANDWIRTSCHAFTLICHE MASCHINE UND VORRICHTUNG ZUR AUSFÜHRUNG DIESES VERFAHRENS
PROCÉDÉ DE SEMIS PAR UNE MACHINE AGRICOLE ET DISPOSITIF PERMETTANT LA MISE EN OEUVRE DUDIT PROCÉDÉ

(30) Priority: 05.11.2009 SE 0950830
(43) Date of publication of application: 12.09.2012
(73) Proprietor: Väderstad-Verken Aktiebolag, 590 21 Väderstad (SE)
(72) Inventor: STARK, Crister, S-590 21 Väderstad (SE)
(74) Representative: Lettström, Richard Wilhelm
(86) International application number: PCT/SE2010/051150
(87) International publication number: WO 2011/056123

(56) References cited:
- EP-A1- 0 160 370
- DE-A1-102007 047 284
- FR-A1- 2 730 713
- US-A- 5 392 722
- US-A- 6 164 222
- US-A1- 2003 131 769
- US-A1- 2003 177 970
- US-A1- 2004 025 766
- US-A1- 2005 028 713
- US-A1- 2005 028 714
- US-B1- 6 308 646

## Description

### Technical field

The present invention relates to a sowing method using a seed drill according to the preamble of claim 1 and to a device for performing the method according to claim 4.

Devices of this kind have pressure sources and air systems for the transport of seed from at least one central container to the grain distribution devices, so called singulators, which are pressurized and feed out seed kernels one by one for further transport via a seed conduit down into a seed furrow while the seed drill moves over the ground. Such devices are suitable at systems with open alternatively pressurized central seed containers.

### Prior art

With the strong development of the agriculture the sowing technique has developed considerably during the latest decades, the machines have become larger, more effective, wider, and they are drawn by larger and larger tractors. Two circumstances are especially interesting to notice. Precision seed drills, so called planters, feed out seed kernels, e.g. corn, one by one to put them into the ground at a certain distance from each other, e.g. 18 cm. These machines usually have a number of seed units or "row units" arranged side by side at a certain mutual distance of 75 cm, for instance. Today, the machines generally have a vacuum system to distribute or "singularize" the seed kernels. There are also some manufacturers who use overpressure systems instead of vacuum. There are machines with up to about 50 row units, which give a very high capacity. Each row unit usually has a drill coulter, which may be provided with double tilted discs, which make a seed furrow in the ground, into which the seed kernels are fed one by one. The sowing unit also has a rotating grain distribution device, a so called singularization disc alternatively a singularization drum, where at rotation the seed kernels one by one are picked up in apertures in the disc/drum due to the fact that a pressure difference is arranged above the disc/drum so that the seed kernels are held by an overpressure or an underpressure, i.e. one kernel in each aperture. When the disc/drum rotates, there is a device loosing the seed kernels from the disc/drum at a predetermined position during its rotation, wherein each kernel having been picked up falls down into the seed furrow in the ground in a similar manner. Each unit usually has a container for storing seed, which is used for the sowing. Obviously, there is a time consuming problem to fill all containers manually at a large machine with many containers. A device of the kind described in the pre-characterizing portions of independent claims 1 and 4 is known from FR 2 730 713 disclosing a seed container having a special distribution system.

There are planters which have so called nursing systems, which is shown in US 6,164,222, for instance, where seed is transported by air from a central container to the row units. These systems often have a pressurized air system for the very transport of seed and another air system, which may be an overpressure system or an underpressure system with the row unit to feed out kernel by kernel, so called grain distribution or singularization. These systems are complicated, expensive and energy consuming.

Another circumstance refers to seed drills feeding out seed in drill coulters, e.g. wheat, in an even flow. Regarding these machines there is a desire to be able also to get the wheat kernels fed one by one. Of course, this is a challenge for a man skilled in the art as it is the question of up to 200 kernels per second and drill coulter, which kernels are to be put out one by one. Seed drills usually have a central container, from which the seed via a grain distribution device in a random manner is carried in conduits to the drill coulters which place the seed into seed furrows in the ground. Seed drills generally have a large number of sowing rows, where a common distance between the rows is 12.5 cm. Normally, the seed drill does not have any equipment to grain distribute/singularize seed (feed out the kernels one by one). With plant cultivators there is a demand to improve the seed drills so that the seed kernels (e.g. wheat) may be sown in a grain distributed way, so that each kernel is sown separated from the next one. This may reduce the amount of seed needed by up to about 30% to give a certain stand. This may also increase both harvest and the quality of the harvest, as each plant gets the same access to earth, water, light, and air. In that case, each plant gets the same life conditions, which implies an even and good development of the entire stand. It may also be emphasized that part of the sowing may take place by means of several seed containers, for instance at sowing of genetically modified corn where groups of seed furrows are alternately sown with genetically modified and not genetically modified corn.

Seed drills may for the reasons mentioned above be divided into two main types, namely precision seed drills or so called planters, and other pneumatic seed drills. Both types may be improved by means of the device according to the present invention.

### Object of the invention

The object of the present invention is to achieve a sowing method with a seed drill and a device for the performance of the method, where the problems mentioned above are effectively and simply avoided.

The object is achieved by a sowing method having the characteristic features of claim 1.

The object is also achieved by a device having the characteristic features of claim 4.

Preferred embodiments of the invention have been given the characteristic features of the sub-claims.

### Disclosure of the invention

Planters may be improved by seed being easily transported from at least one central container to a plurality of planter units where the seed is grain distributed or singularized by means of a grain distribution disc or grain distribution drum, which is pressurized by the air flow and feed kernel by kernel further down into the seed furrow. All takes places by means of one and the same air flow from one single air system, which preferably has a pressure source. Thus, this may take place with only a few machine elements added and at a comparatively low additional cost.

Seed drills, which already have a central container, may by means of the device according to the invention comparatively easy be provided with grain distributors/singulators to which the seed is transported. The grain distribution device with the disc or drum is pressurized by the air flow and the seed is grain distributed and transported down into the seed conduit and further down into the ground by the same air flow.

The grain distribution disc/drum may be mechanically driven but for practical reasons an electric driving is preferred by preferably building in a small electric motor in each grain distribution unit. Thanks to the development of the device of the invention it will become easier and more cost efficient to build seed drills with grain distribution.

### Brief description of drawings

The invention is described more in detail below with reference to the enclosed drawings, which show preferred embodiments.
- Fig. 1: shows a side view of a seed drill comprising a device according to the invention.
- Fig. 2: shows a partial, enlarged view of the grain distribution device of Fig. 1.
- Fig. 3: shows a schematically enlarged sectioned side view to clarify the function of the device of the invention.
- Fig. 4: shows another seed drill with the device of the invention.
- Fig. 5: shows a partial, enlarged view of a detail of Fig. 4.
- Fig. 6: shows a plan view of an additional seed drill with a device of the invention.
- Fig. 7: shows a detail view of Fig. 6 in a larger scale.
- Fig. 8: shows a plan view of an additional seed drill, which is somewhat modified with respect to the seed drill of Fig. 6.
- Fig. 9: shows a schematic side view of yet another seed drill with the device of the invention.
- Fig. 10: shows a schematic side view of yet another seed drill with the device of the invention.
- Fig. 11: is a cross-section in a larger scale of a grain distribution device included in the device of the invention.

### Description of preferred embodiments

Similar parts of the different embodiments shown in the drawings have in certain cases got the same reference numerals.

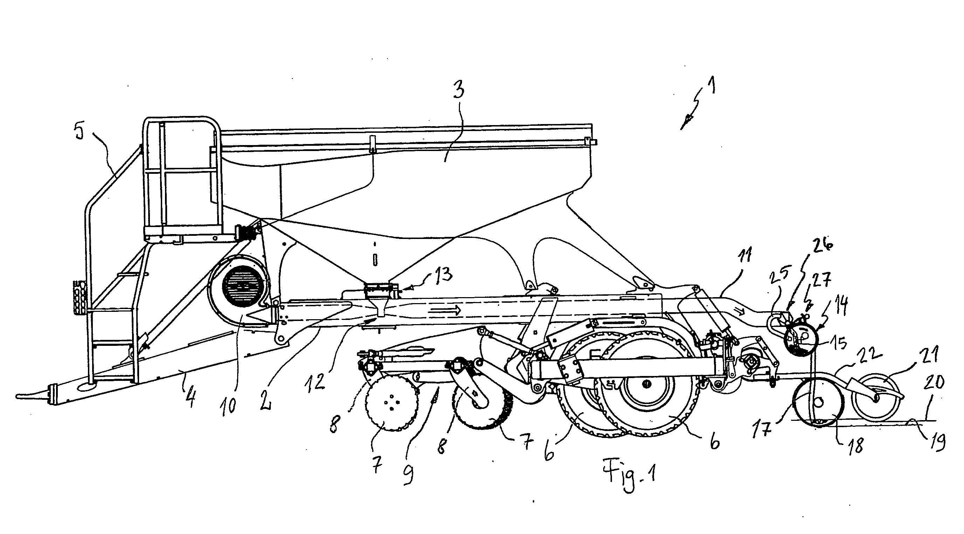

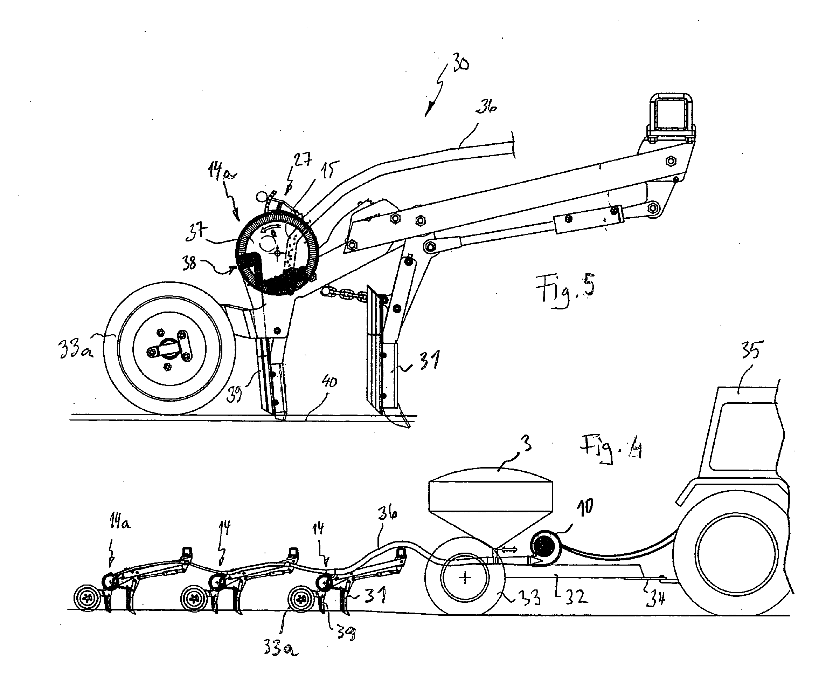

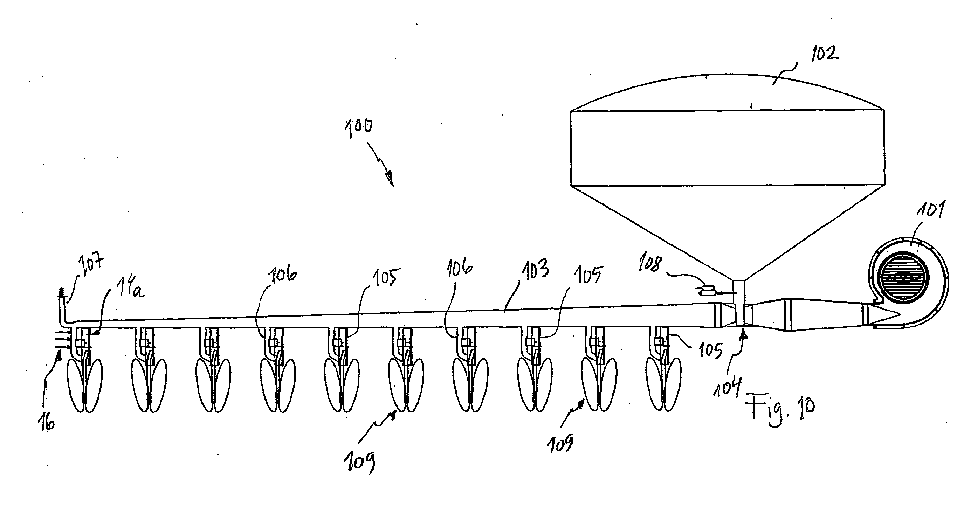

In Fig. 1 a seed drill 1 is shown, comprising a frame 2, at least one, preferably centrally mounted, container 3 for seed kernels mounted on the frame 2. A pulling device 4 is articulately attached to the front part of the frame 2 as to be coupled to a traction vehicle (not shown), such as a tractor. A platform arrangement 5 with an access portion is provided at the container 3 for inspection, maintenance and filling of the container 3. Transport wheels 6 are indirectly journalled on the frame 2. Pre-tools 7 for cultivation are arranged on arms 8, which are attached to a linkage system 9, which is connected to the frame 2. A pneumatic means as well as a pressure source, suitably in the form of at least one fan 10, for the discharge and transport of seed kernels pressurize one single conduit 11 or a conduit system. This conduit 11 passes the container 3, where the seed kernels are fed into the conduit, for instance by means of an ejector device 12 or a mechanical device (not shown). At an embodiment (not shown), where the entire container is pressurized, this may take place with only one aperture which may be varied as to shape and closed. The fan 10 drives an air flow through the ejector device 12 in the air conduit 11, where the seed kernels are received and further through the conduit 111 into one or several grain distribution or singularization units 14. The ejector device 12 in the conduit 11 is arranged below a discharge device 13 for seed kernels from the container 3, which discharge device is arranged at the underside of the container 3. The mixture of air and seed kernels is carried further by the air flow after the ejector device 12 first to the first grain distribution unit 12, where some of the seed kernels are delivered by a simple device where they are blown through a tube 15 and fall down into the grain distribution unit 14. When the first grain distribution unit 14 has been filled, seed kernels may no longer fall down in its container but continue to the next container, etc. This procedure continues until the last container with the grain distribution units 14 has been filled, wherein the filling in the conduit 11 with the central container is interrupted (see Figs. 5, 6, 8, 10). At least one level guard 16 is included in the system, preferably at the last grain distribution unit 14a in the conduit 11 (see Fig. 10). The level guard 16 reports when the space is full and the feeding is interrupted and when the feeding is to be resumed, alternatively. When the feeding from the central container 3 has been stopped, the air flow now continues to flow in the conduit without any intervention of seed kernels flowing in the conduit 11. This air flow pressurizes the grain distribution units 14 which pick up seed kernel by seed kernel and when, at a predetermined position along the disc/drum, they are released therefrom, the air flow supplies them to a point where they may pass into a seed conduit 17 where the seed kernels one by one are blown down into a seed furrow 19 prepared in the ground 19 by means of an air flow generated by the pressure in the grain distribution unit 14. To make this function it is required that the pressure/flow of the pressure source 10 is adapted to the seed drill 1 as well as to the current sowing conditions. This takes place in a known manner, for instance by throttling or by the rotation speed of the fan 10 being adjusted, for instance by the oil flow with a hydraulically driven fan.

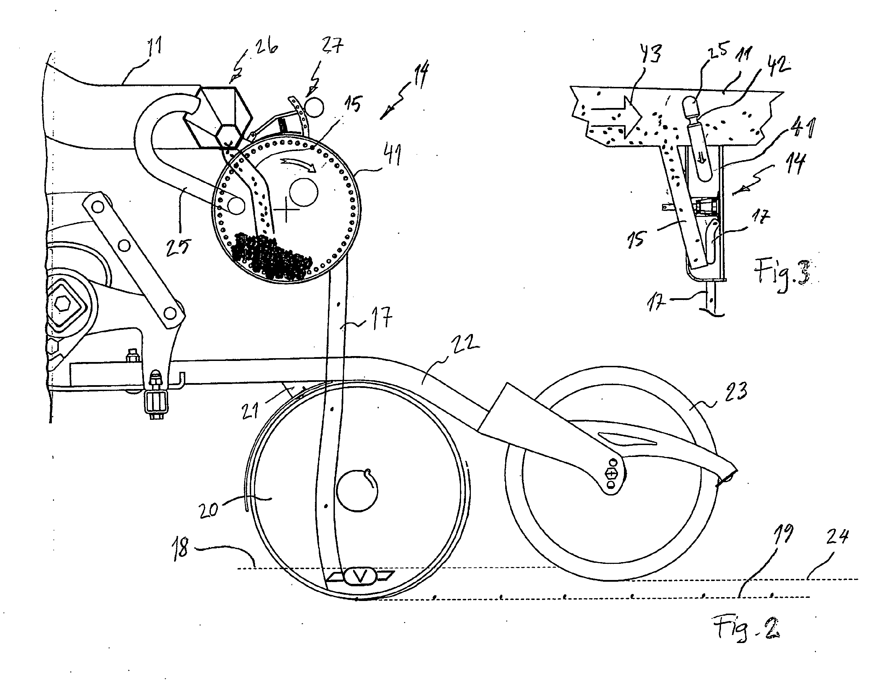

A conventional V-disc unit 20 is mounted on an arm 21, which in its turn is attached to an additional arm 22 which in a conventional manner is connected to the seed drill. After each V-disc unit a packing wheel 23 is mounted on the arm 22 as to pack the earth to a level 24 (see Fig. 2). The device according to the invention comprises also an additional conduit 25, which is connected between the conduit 11 and the grain distribution unit 14 to pressurize this so that a substantially even pressure arises in all grain distribution units 14. At 26 it is schematically shown that the conduit 11 tapers towards the next grain distribution unit 14. This is clearly shown in Figs. 4 and 10, i.e. that the conduits 36 and 103, respectively, tapers successively towards the last grain distribution units 14a.

It is necessary to be able to adjust the pressure in the grain distribution units 14 so that an optimal pressure for certain crops may be guaranteed. This takes suitably place by each grain distribution unit 14 having at least one air outlet at 27, for instance by a spring loaded door or throttle being opened when the pressure increases above a preset value. The spring of the door has a spring force which may easily be changed. In an embodiment of the invention a throttle is opened in the grain distribution unit according to Fig. 2.

When the seed kernels one by one have been released from the grain distribution unit 14, they are forced down through the seed conduit 17 and down in to the seed furrow 19 by the air stream which leaks out from the grain distribution unit.

At another embodiment (not shown) the air/seed conduit runs from the container to a distributor where the flow of seed kernels and air is distributed and a conduit is drawn to each unit or singulator. Both embodiments are quite possible within the scope of the device of the invention. With one distributor the adjustment of the feeding of seed kernels to the grain distribution units may become somewhat more complicated.

Further, the machine has an electric system (not shown) for control and handling of the functions of the machine. Many types of seed drills and cultivator seed drills, so called air seeders, may be equipped with grain distribution units 14, as at the device of the invention.

Fig. 2 shows a detail view of a grain distributor or singulator 14 with its supply conduit 11. A mixture of air/seed kernels enters the conduit 11 from a container and a fan according to Fig. 1, for instance. The seed kernels fall down into the tube 15, which branches from the conduit 11, and down into the container 41 of the grain distribution unit 14. When the tube 15 is full, the seed kernels are blown further to the next grain distribution unit and are brought down into a tube extending into the next container 41, which tube is filled in a similar way, etc. The conduit 11 is, as already mentioned, tapering to maintain substantially the same air speed through the entire conduit and to all grain distribution units. Each grain distribution unit 14 has a second air supply through a conduit 25 emanating from the conduit 11, which conduit 25, through a filter means, such as a net or grating, arranged at its inlet, allows only the air flow to pass so that the air flow entering the conduit is free from seed kernels in order always to be pressurized in the correct manner. At top of the grain distribution unit at 27 a throttle is arranged for the air outlet for the discharge of overpressure. This valve is provided with a control where the farmer may set the correct position (the correct overpressure) for the seed kernels in question. The grain distribution units 14 have inlet areas which are adapted to their air consumption. These areas may be adjustable. Fig. 3 shows, in a larger scale, the grain distribution unit 14, the conduit 11, the tube 15, the conduit 25 with a throttle 42 for the control of the pressure and the seed conduit 17 for the seed kernels, which run down towards the seed furrow. The direction of the air flow is indicated with an arrow 43.

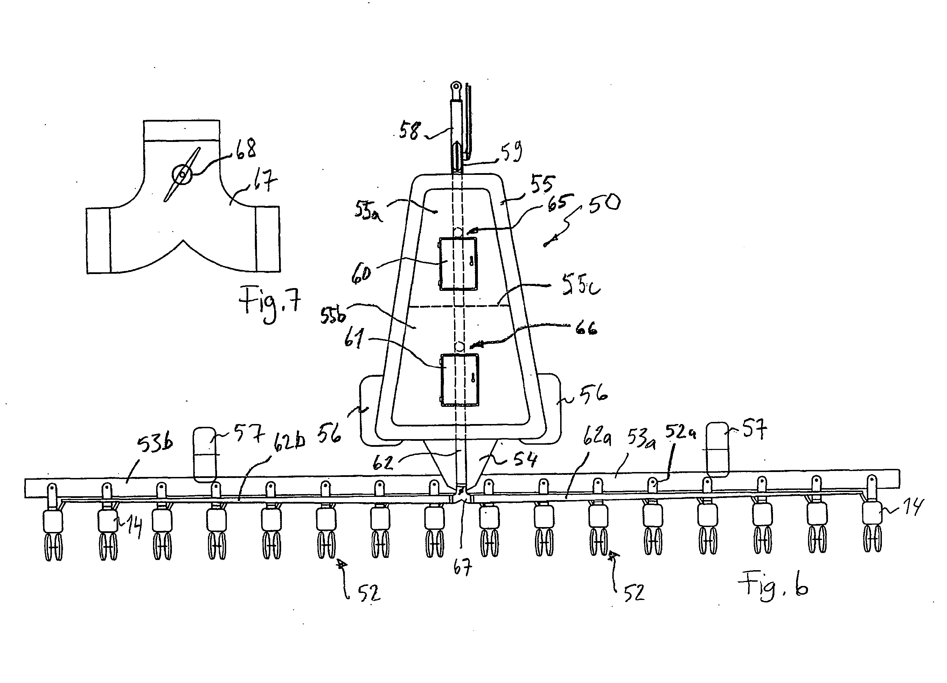

In Figs. 4 and 5 a second embodiment of a device of the invention is shown. A cultivator seed drill has a pressure source in the form of a fan 10 driving an air flow via a seed container 3 to a grain distribution unit 14 at a drill coulter 31 and further to the next grain distribution unit 14, and so on to the last grain distribution unit 14a. Fig. 4 shows three sowing units, which are connected after each other, with a grain distribution unit each 14, 14a. The seed drill is in this way shown for an illustrative reason. Normally, the seed drill comprises also a number of sowing units, which are arranged parallel to each other along the entire width of the machine at a number of certain length positions. In this way, one or more valves for the distribution of the flow of air and seed kernels may be present (as described with reference to Figs. 6 and 7). One or more conduits for the flow of air and seed kernels to the grain distribution units may also be arranged in rows across the driving direction of the seed drill.

The seed container 3 rests on a frame 32, which supports transport wheels 33. A packing wheel is designated 3 3 a, which is arranged behind the coulter 31. A draw bar 34 is arranged in front of the frame 32 and is coupled to a traction vehicle; such as a tractor 35 (partly shown). In this example the grain distribution units 14, 14a have a known design. The air flow through the hose 36 pressurizes the grain distribution units 14, 14a, which by means of their grain distribution discs 37, which are provided with apertures, pick up seed kernel by seed kernel by means of a perforated portion along the periphery of the disc 37 (see the last grain distribution unit 14a in Fig. 5). When the disc 37 rotates, each seed kernel picked up passes into a region 38 where the overpressure is shielded in a known way. In this shielded region 38, the seed kernel falls without air assistance down into a seed conduit 39, which runs down into the seed furrow 40. This may be a suitable alternative when the requirement for precision or for a high driving speed is low. The diameter of the conduit 36 decreases after each grain distribution unit 14, 14a to keep the air speed analogous so that it is guaranteed that the seed kernels are safely transported also when the conduit 36 is hanging in curves, as may be seen in Fig. 2.

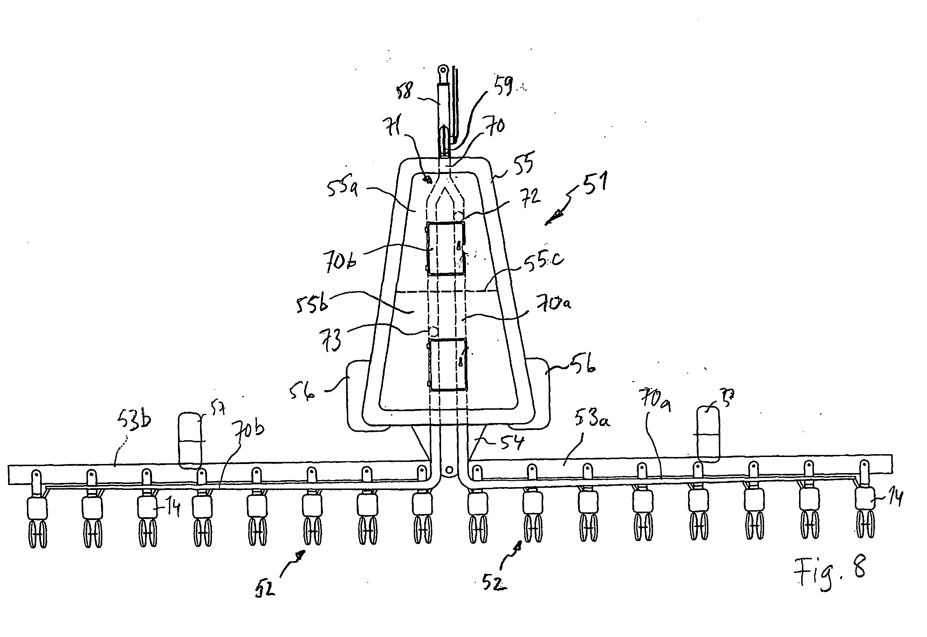

Fig. 6 and Fig. 8 schematically show plan views of a precision seed drill 50 and 51, respectively, a so called planter, with the device of the invention. Both machines 50, 51 have 16 row units 52, which are all linked by a link coupling 52a to the main frame beams 53a, 53b, which are connected with a frame 54. A seed container 55, which may consist of at least one container, is mounted on the frame 54 as well as wheels 56. Support wheels 57 are mounted on the frame beam 53. Each row unit 52 may via its link coupling 52a to the frame 53 follow the irregularities of the ground and sow the seed kernels at an essentially even depth. The machines 50, 51 have a fan 59 at a pulling device 58, which is connected to the frame and which may be coupled to a traction vehicle. At the embodiments shown in Figs. 6 and 8, a seed container 55 for seed kernels is shown with two compartments 55a, 55b, which are separated by a wall 55c, which is indicated with a dashed line, and which are accessible via two inspection or feed doors 60, 61. An air conduit 62 runs below the seed container 55, which conduit is arranged to carry the seed kernels. Outlets 63 and 64 for the seed kernels are arranged below each compartment 55a and 55b, respectively. The conduit 62, 70 for mixing air and seed kernels is arranged, preferably with branch conduits 62a, 62b, 70a, 70b, between said pressure source and said grain distribution units 14, 14a, wherein the grain distribution units are arranged in groups in series along the branch conduits.

At the embodiment according to Fig. 6 the conduit divides into a right branch conduit 62a and a left branch conduit 62b behind the seed container 55. Outlets 69 and 70 for the seed kernels are arranged below each compartment 55a and 55b, respectively. At the partition a T-piece 67 is mounted, which is shown in a larger scale in Fig. 7. This T-piece 67 is provided with a throttle 68 to balance the flow of seed kernels between the right side and the left side of the machine. The T-piece 67 is so designed that the throttle 68 may move in a limited angle region, which heavily influences how great part of the seed kernels will pass to one or the other side without influencing the air flow to any significant extent. Normally, the throttle is in a preset neutral position. The throttle 68 is not activated until the level guards 16 (see Fig. 10) inside or near the grain distribution units 14, which primarily have been built in the outer edges of the machines, warns via the electric system of the machine about an unbalance in the seed flow between the branch conduits 62a and 62b. Several grain distribution units 14 may be provided with level guards 16, if needed, among others to control the balance between the right side and the left side of the machine 50. Then, by means of the information from the level guards, the distribution throttle 68 may be adjusted so that enough feeding of the seed kernels is guaranteed to both sides.

At the embodiment according to Fig. 8, the conduit 70 divides into a right branch conduit 70a and a left branch conduit 70b at the front portion at 71 of the seed container 55. The right branch conduit 70a bends 90° at the frame beam 53a. The branch conduits 70a and 70b of the conduit 70 are so designed below the seed container 55 that they are provided with one inlet each, which is connected to one outlet each 72 and 73, respectively, below on compartment each 55a and 55b, respectively, of the seed container 55. The discharge devices 72 and 73 below the seed container 55 influence how great part of the seed kernel enters one or the other side without influencing the air flow to any significant extent. Normally, the outlet devices 72 and 73 are in a preset neutral position. These discharge devices 72 and 73, respectively, are not activated until the level guards (see Fig. 10) inside or near the grain distribution units 14 primarily included in the outer edges of the machines warn via the electric system of the machine about an unbalance in the seed kernel flow between the branch conduits 70a and 70b. During certain circumstances, it may for instance be necessary to sow different kinds of seed at the same time, as mentioned above.

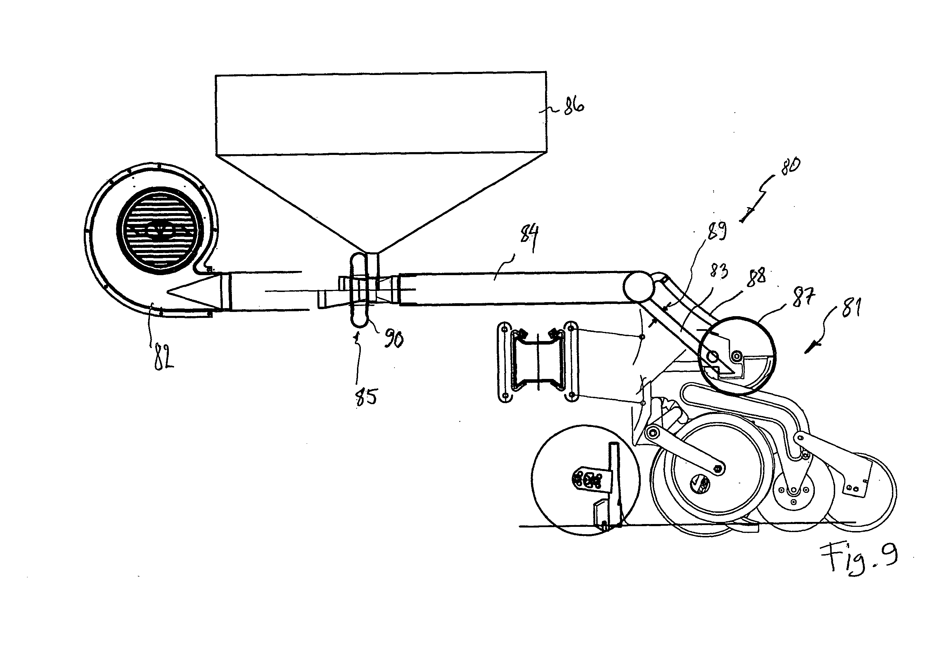

Fig. 9 schematically shows a side view of a planter 80 with a planter unit 81. These are pressurized by a fan 82 and get a supply of seed kernels in the lower conduit 83 from the air conduit 84 after an ejector device 85 below an outlet from the seed container 86 for seed kernels. The upper conduit 88 pressurizes a grain distribution unit 87 whether the seed kernels are fed or not. The outermost planter unit 81 has a level guard marked with opposite arrows 89. The level guard 89 may be a photocell. In Fig. 9 an opening and closing unit of the ejector device 85 is visible for connecting and disconnecting, respectively, the seed kernel supply. In the example, a bellows 90 is used, which gets its pressure from the fan 92. This pressure is connected/disconnected by an electric solenoid (not shown). Many other kinds of servo means may be used, such as a hydraulic cylinder, an electric ball screw, etc. In Fig. 9 an ejector device 85 is shown when it is closed over the centre line, whereby the system is pressurized without any seed kernels being fed further. Below the centre line the ejector device 85 is open and the left half has been moved to the left, so that the seed kernels may flow down into the grain distribution unit 87. Also here, the system is pressurized and the air is mixed with the seed kernels.

Fig. 10 shows a schematic view of a precision seed drill 100, a so called planter, with a fan 101 for generating pressure and air flow. The planter 100 has a seed container 102, which may be open or closed. It also shows a conduit 103 for air and seed kernels extending below the container 102 for the supply of seed kernels in the conduit 103. In this case, the seed kernels are brought in via an ejector device 104. The air conduit 103 then runs further to the grain distribution units 105 via conduits 106, where the seed kernels are delivered to each unit. Each grain distribution unit 104 also consumes air, and therefore the conduit 103 needs to be tapered, to give, at each occasion, substantially a common, certain air speed along the entire conduit, e.g. 30 m/sec. This is important to secure a safe transport of the seed kernels even if the machine is driven on an irregular ground and to guarantee enough pressure to each grain distribution unit 105. The conduit 103 may be manufactured of metal, plastics or rubber to be flexible. The material of the conduit 103 is chosen depending on how the conduit is built into the machine. In addition, a conduit (not shown) is arranged at each grain distribution unit 105 to pressurize the unit. Furthest to the left in Fig. 10, it is indicated where one or more level guards 16 may be built in (3 in this example). Also an outlet device 107 for surplus air is outlined. This outlet may be needed in certain cases to guarantee a sufficiently high air speed in the conduit for air and seed kernels. This outlet may be brought further to the container to return a possible surplus of seed kernels.

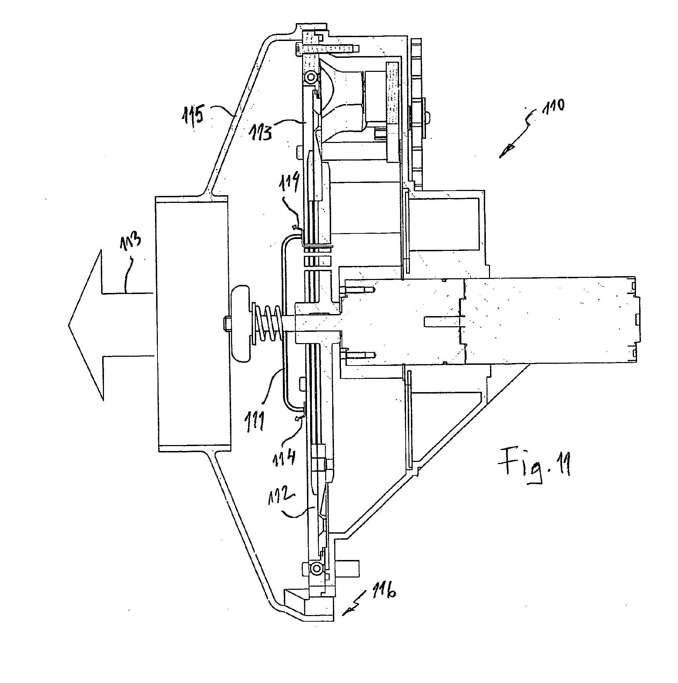

A seed drill 100 may be equipped with several level guards at several grain distribution units 105 to achieve a constant control so that the right side and the left side get the correct amount of seed kernels. In Fig. 10, another type of a shut-off device 108 is shown, such as an electric servo which regulates a shut-off door. A tool has been designated 109, which will make a seed furrow, in which the seed kernels are to be put. Fig. 11 shows a grain distribution unit 110 with a valve device 111 for discharging overpressure air so that the grain distribution unit 110 will keep the preset air pressure. This overpressure valve or this throttle 111 is so designed that it is mounted in the hub 113 of the grain distribution disc 112 to discharge air in the direction of arrows 114 where it is collected inside a casing 115, which along its periphery at 116 is attached to the periphery of the grain distribution unit 110. The throttle 111 is so constructed that excess air leaks out into a conduit (not shown), which recollects the leakage air and returns it to the pressure source. The intention is that the air contaminated with pesticides shall not be freely released into the environment. By collecting the leakage air, the contaminated air may be recovered and returned into the system in order finally to be brought into the earth through the tube which bring the seed kernels from the grain distribution units down into the earth.

The function of the embodiments shown in the drawings is the following:
An air flow is generated by the pressure source 10, 59, 82, 101, and thereafter the seed kernels are supplied from the seed container to the air flow. Then the seed kernels are supplied to at least one grain distribution unit 14, 14a, 87, 105, 110. At the same time, each grain distribution unit is pressurized by means of said air flow at said unit, and finally the seed kernels are transported further through a seed conduit 17, 39 for seed kernels.

Of course, the invention may be used at different kinds of agricultural machines. At embodiments described above, a fertilizer part is only shown in Fig. 9, where a drill coulter is shown which brings the fertilizer into the ground, usually beside the seed furrow to prevent that the fertilizer damages (bums) the seed at germination. As the fertilizer part does not influence the invention, it has not been mentioned in detail in this document. The device according to the invention is above all intended for seed in the form of seed kernels, such as corn or barley, but other granulates, such as imbedded grains for growing sugar beets and wheat are also possible. It is also possible to put down the fertilizer in the ground either in the same row unit or separately.

Here, it should be pointed out that for planters as well as seed drills, a simple technique is offered which with only one comparatively simple air system may transport seed kernels from the central container for seed or other granulates, distribute the seed kernels to a great number of grain distribution units, pressurize the grain distribution units and transport the grain distributed or singularized seed kernels down into the earth.

The characteristic features of the embodiments described and shown above are not limiting but, as a certain number of conduit sections, tool units or other exemplified devices, which are arranged after each other, are shown, this number may, of course, be varied within the scope of the appended claims.

The expression seed drill used here refers to precision seed drills or other pneumatically pressurized seed drills.

Although several embodiments of the invention have been described above, the device of the invention may be modified through combinations of characteristics of these embodiments within the scope of the appended claims.

## Claims

1. A sowing method using a seed drill comprising at least a seed container (3, 55, 86, 102) for seed kernels or the like, and several tools (18, 31, 20, 52, 109) to bring the seed kernels down into the ground, wherein the seed drill has a pneumatic means (10, 59, 82, 101) in the form of at least one pressure source, such as a fan, for the transport of the seed kernels in at least one conduit (11, 36, 62, 70, 84, 103) from the seed container to the tools, said method comprising the steps:
- that an air flow is generated by said pneumatic means (10, 59, 82, 101);
- that the seed kernels are supplied to said air flow from said seed container (3, 55, 86, 102);
**characterized by** the further steps:
- that the seed kernels are supplied to at least one grain distribution unit (14, 14a, 87, 105, 110) with a disc or drum having apertures for the seed kernels;
- that each grain distribution unit is pressurized by means of said air flow at said unit via an additional conduit (25, 88), which is connected between said at least one conduit (11, 36, 62, 70, 84, 103) and said at least one grain distribution unit (14, 14a, 87, 105, 110), to pressurize the disc or drum; and
- that the seed kernels are transported further through a seed conduit (17, 39) for seed kernels down into the ground.

2. A sowing method according to claim **1, characterized in that** the pressurization of each grain distribution unit (14, 14a, 87, 105, 110) is achieved by an influx (25, 88), preferably a conduit which is connected for the receipt of pressure from said air flow from a place adjacent to said grain distribution unit.

3. A sowing method according to claim 2, **characterized in that** the pressurized air supplied to each grain distribution unit (14, 14a, 87, 105, 110) to pressurize the drum or disk is released from the conduit conveying the seed kernels to the at least one grain distribution unit.

4. A device for the performance of the method according to claims 1 to 3 using a seed drill comprising at least one seed container (3, 55, 86, 102) for seed kernels or the like, and several tools (18, 31, 20, 52 , 109) for bringing the seed kernels down into the ground, wherein the seed drill has a pneumatic means (10, 59, 82, 101) in the form of a pressure source, such as a fan, for the transport of the seed kernels from the seed container in at least one conduit (11, 36, 62, 70, 84, 103) to the tools, wherein the pneumatic means is arranged to create an air flow taking up the seed kernels from the seed container, the seed drill comprising one grain distribution unit (14, 14a, 87, 105, 110) connected to each tool having a disc or a drum with apertures for the seed kernels for receiving the air flow and attaching the seed kernels to the disc or drum of the grain distribution unit, the grain distribution unit (14, 14a, 87, 105, 110) being arranged to be pressurized by means of said air flow, c **haracte-rized** in that the grain distribution unit (14, 14a, 87, 105, 110) is arranged to be pressurized by means of said air flow at said unit via an additional conduit (25, 88), which is connected between said at least one conduit (11, 36, 62, 70, 84, 103) and said each grain distribution unit (14, 14a, 87, 105, 110), to pressurize the disc or drum by the portion of the pneumatic means (10, 59, 82, 101) which provides the air flow, and that one seed conduit (17, 39) for seed kernels is connected to each grain distribution unit.

5. A device according to claim 4, **characterized in that** said pressurization generated by means of an additional conduit (25, 88) by each grain distribution unit is arranged to keep the seed kernels in place on at least said disc or drum, respectively.

6. A device according to claim 4 or **5, characterized in that** the conduit (11, 36, 62, 70, 84, 103) for mixing air and seed kernels is arranged, preferably with branches (62a, 62b, 70a, 70b), between said pressure source and said grain distribution units (14, 14a, 87, 105, 110) and that the grain distribution units are arranged in groups in series along the conduit.

7. A device according to claim 6, **characterized in that** said conduit (11, 36, 62, 70, 84, 103) has a decreasing cross-section as to keep the air speed substantially constant over all grain distribution units (14, 14a, 87, 105, 110) connected to the pressure source.

8. A device according to any of the claims 4 to 7, **characterized in that** said grain distribution units (14, 14a, 87, 105, 110) have at least one influx (15, 83) for mixing the air and the seed kernels and at least one influx (25, 88, 106), preferably a conduit, for the air as to achieve a substantially uniform pressurization of the grain distribution units.

9. A device according to any of the claims 4 to 8, **characterized in that** said grain distribution units (14, 14a, 87, 105, 110) have a valve means (68, 110), such as a valve or a throttle, which may be controlled to adjust the air pressure intended therein, and that said valve means (110) preferably is so designed that it is connectable to a reflux return conduit returning the air to said pressure source.

10. A device according to any of the claims 4 to 9, **characterized in that** at least one level guard (16) is provided at one of said grain distribution units (14, 14a, 87, 105, 110) to sense when the space in the grain distribution unit has been filled with seed kernels and feeding must be interrupted and when the feeding is to be resumed.

11. A device according to the claim **10, characterized in that** the seed drill comprises sections (30, 53a, 53b, 109) extending in different direction with tools, and **in that** said level guard (16) is arranged to sense different load changes in different sections, and to influence the flow in order to adjust it so that a balance in the seed kernel in the seed kernel flow between branch conduits of the sections is regained.

## Patentansprüche

1. Säverfahren unter Verwendung einer Sämaschine, umfassend wenigstens einen Saatbehälter (3, 55, 86, 102) für Samenkerne oder dergleichen, und mehrere Werkzeuge (18, 31, 20, 52, 109), um die Samenkerne nach unten in den Boden einzubringen, wobei die Sämaschine ein Pneumatik-Mittel (10, 59, 82, 101) in der Form von wenigstens einer Druckquelle aufweist, beispielsweise ein Gebläse, für den Transport der Samenkerne in wenigstens einer Leitung (11, 36, 62, 70, 84, 103) von dem Saatbehälter zu den Werkzeugen, das Verfahren umfassend die Schritte:
- dass eine Luftströmung durch das Pneumatik-Mittel (10, 59, 82, 101) erzeugt wird,
- dass die Samenkerne von dem Saatbehälter (3, 55, 86, 102) der Luftströmung zugeführt werden,
**gekennzeichnet durch** die weiteren Schritte:
- dass die Samenkerne wenigstens einer Korn-Verteilungseinheit (14, 14a, 87, 105, 110) mit einer Scheibe oder Trommel zugeführt werden, die Öffnungen für die Samenkerne aufweist,
- dass jede Korn-Verteilungseinheit vermittels der Luftströmung an der Einheit mit Druck beaufschlagt wird, über eine zusätzliche Leitung (25, 88), die zwischen der wenigstens einen Leitung (11, 36, 62, 70, 84, 103) und der wenigstens einen Korn-Verteilungseinheit (14, 14a, 87, 105, 110) angeschlossen ist, um die Scheibe oder Trommel mit Druck zu beaufschlagen, und
- dass die Samenkerne weiter **durch** eine Samenleitung (17, 39) für Samenkerne nach unten in den Boden transportiert werden.

2. Säverfahren nach Anspruch 1, **dadurch gekennzeichnet, dass** die Druckbeaufschlagung jeder Korn-Verteilungseinheit (14, 14a, 87, 105, 110) durch einen Zufluss (25, 88) erreicht wird, bevorzugt eine Leitung, die angeschlossen ist, um Druck von der Luftströmung von einem Ort benachbart zu der Korn-Verteilungseinheit aufzunehmen.

3. Säverfahren nach Anspruch 2, **dadurch gekennzeichnet, dass** die Druckluft, die jeder Korn-Verteilungseinheit (14, 14a, 87, 105, 110) zugeführt wird, um die Trommel oder Scheibe mit Druck zu beaufschlagen, von der Leitung abgegeben wird, welche die Samenkerne zu der wenigstens einen Korn-Verteilungseinheit fördert.

4. Einrichtung zur Durchführung des Verfahrens nach Ansprüchen 1 bis 3, unter Verwendung einer Sämaschine, umfassend wenigstens einen Saatbehälter (3, 55, 86, 102) für Samenkerne oder dergleichen, und mehrere Werkzeuge (18, 31, 20, 52, 109), um die Samenkerne nach unten in den Boden einzubringen, wobei die Sämaschine ein Pneumatik-Mittel (10, 59, 82, 101) in der Form von einer Druckquelle aufweist, beispielsweise ein Gebläse, für den Transport der Samenkerne von dem Saatbehälter in wenigstens einer Leitung (11, 36, 62, 70, 84, 103) zu den Werkzeugen, wobei das Pneumatik-Mittel dazu eingerichtet ist, eine Luftströmung zu erzeugen, welche die Samenkerne von dem Saatbehälter aufnimmt, wobei die Sämaschine eine mit jedem Werkzeug verbundene Korn-Verteilungseinheit (14, 14a, 87, 105, 110) umfasst, die eine Scheibe oder Trommel mit Öffnungen für die Samenkerne aufweist, um die Luftströmung zu empfangen, und damit die Samenkerne an der Scheibe oder Trommel der Korn-Verteilungseinheit haften, wobei die Korn-Verteilungseinheit (14, 14a, 87, 105, 110) dazu eingerichtet ist, vermittels der Luftströmung mit Druck beaufschlagt zu werden, **dadurch gekennzeichnet, dass** die Korn-Verteilungseinheit (14, 14a, 87, 105, 110) dazu eingerichtet ist, vermittels der Luftströmung an der Einheit über eine zusätzliche Leitung (25, 88) mit Druck beaufschlagt zu werden, die zwischen der wenigstens einen Leitung (11, 36, 62, 70, 84, 103) und der jeweiligen Korn-Verteilungseinheit (14, 14a, 87, 105, 110) angeschlossen ist, um die Scheibe oder Trommel mit Druck zu beaufschlagen, durch den Abschnitt des Pneumatik-Mittels (10, 59, 82, 101), welcher die Luftströmung liefert, und dass eine Samenleitung (17, 39) für Samenkerne mit jeder Korn-Verteilungseinheit verbunden ist.

5. Einrichtung nach Anspruch 4, **dadurch gekennzeichnet, dass** die vermittels einer zusätzlichen Leitung (25, 88) durch jede Korn-Verteilungseinheit erzeugte Druckbeaufschlagung dazu eingerichtet ist, die Samenkerne wenigstens an der Scheibe oder Trommel jeweils am Platz zu halten.

6. Einrichtung nach Anspruch 4 oder 5, **dadurch gekennzeichnet, dass** die Leitung (11, 36, 62, 70, 84, 103) zum Mischen von Luft und Samenkernen zwischen der Druckquelle und den Korn-Verteilungseinheiten (14, 14a, 87, 105, 110) angeordnet ist, bevorzugt mit Abzweigungen (62a, 62b, 70a, 70b), und dass die Korn-Verteilungseinheiten in Gruppen in Reihe entlang der Leitung angeordnet sind.

7. Einrichtung nach Anspruch 6, **dadurch gekennzeichnet, dass** die Leitung (11, 36, 62, 70, 84, 103) einen abnehmenden Querschnitt hat, um die Luft-Geschwindigkeit im Wesentlichen über alle mit der Druckquelle verbundenen Korn-Verteilungseinheiten (14, 14a, 87, 105, 110) konstant zu halten.

8. Einrichtung nach einem der Ansprüche 4 bis 7, **dadurch gekennzeichnet, dass** die Korn-Verteilungseinheiten (14, 14a, 87, 105, 110) wenigstens einen Zufluss (15, 83) aufweisen, um die Luft und die Samenkerne zu mischen, und wenigstens einen Zufluss (25, 88, 106) für die Luft aufweisen, bevorzugt eine Leitung, um eine im Wesentlichen gleichförmige Druckbeaufschlagung der Korn-Verteilungseinheiten zu erreichen.

9. Einrichtung nach einem der Ansprüche 4 bis 8, **dadurch gekennzeichnet, dass** die Korn-Verteilungseinheiten (14, 14a, 87, 105, 110) ein Ventil-Mittel (68, 110) aufweisen, beispielsweise ein Ventil oder eine Drossel, welches gesteuert/geregelt werden kann, um den darin gewünschten Luftdruck einzustellen, und dass das Ventil-Mittel (110) bevorzugt so gestaltet ist, dass es mit einer Rückfluss-Rückführungsleitung verbindbar ist, welche die Luft zurück zu der Druckquelle liefert.

10. Einrichtung nach einem der Ansprüche 4 bis 9, **dadurch gekennzeichnet, dass** wenigstens eine Niveau-Überwachungseinrichtung (16) an einer von den Korn-Verteilungseinheiten (14, 14a, 87, 105, 110) vorgesehen ist, um zu erfassen, wenn der Raum in der Korn-Verteilungseinheit mit Samenkernen gefüllt worden ist und eine Zufuhr unterbrochen werden muss, und wenn die Zufuhr wieder aufgenommen werden soll.

11. Einrichtung nach Anspruch 10, **dadurch gekennzeichnet, dass** die Sämaschine Abschnitte (30, 53a, 53b, 109) umfasst, die sich in verschiedene Richtung erstrecken, mit Werkzeugen, und dadurch, dass die Niveau-Überwachungseinrichtung (16) dazu eingerichtet ist, verschiedene Belastungsänderungen in verschiedenen Abschnitten zu erfassen, und die Strömung zu beeinflussen, um diese so einzustellen, dass wieder ein Samenkern-Gleichgewicht in der Samenkern-Strömung zwischen Abzweigungsleitungen von den Abschnitten erhalten wird.

## Revendications

1. Un procédé d'ensemencement utilisant un semoir comportant au moins un récipient à graines (3, 55, 86, 102) pour des graines d'ensemencement ou analogues, et plusieurs outils (18, 31, 20, 52, 109) pour amener les graines d'ensemencement dans le sol, le semoir comportant des moyens pneumatiques (10, 59, 82, 101) sous la forme d'au moins une source de pression, par exemple un ventilateur, pour le transport des graines d'ensemencement dans au moins un conduit (11, 36, 62, 70, 84, 103) depuis le récipient à graines vers les outils, ledit procédé comprenant les étapes consistant :
- en le fait que l'écoulement d'air est généré par lesdits moyens pneumatiques (10, 59, 82, 101) ;
- en le fait que les graines d'ensemencement sont délivrée dans ledit écoulement d'air depuis ledit récipient à graines (3, 55, 86, 102) ;
**caractérisé par** les étapes supplémentaires consistant :
- en le fait que les graines d'ensemencement sont alimentées dans au moins une unité de distribution de graines (14, 14a, 87, 105, 110) avec un disque ou un tambour comportant des ouvertures pour les graines d'ensemencement ;
- en le fait que chaque unité de distribution de graines est mise sous pression au moyen dudit flux d'air, au niveau de ladite unité, via un conduit supplémentaire (25, 88), qui est branché entre ledit au moins un conduit (11, 36, 62, 70, 84, 103) et ladite au moins une unité de distribution de graines (14, 14a, 87, 105, 110), pour mettre le disque ou le tambour sous pression ;
- et en le fait que les graines d'ensemencement sont transportées en outre par une conduite à graines (17, 39) pour amener les graines d'ensemencement dans le sol.

2. Un procédé d'ensemencement selon la revendication 1, **caractérisé en ce que** la mise sous pression de chaque unité de distribution de graines (14, 14a, 87, 105, 110) est réalisée par une arrivée d'air (25, 88), de préférence au moyen d'un conduit qui est connecté pour la réception d'une pression depuis ledit flux d'air, à partir d'un endroit adjacent à ladite unité de distribution de graines.

3. Un procédé d'ensemencement selon la revendication 2, **caractérisé en ce que** l'air sous pression délivré à chaque unité de distribution de graines (14, 14a, 87, 105, 110) pour mettre sous pression le tambour ou le disque est délivré depuis la conduite de transport des graines d'ensemencement à ladite au moins une unité de distribution de graines.

4. Un dispositif pour la mise en oeuvre du procédé selon les revendications 1 à 3, utilisant un semoir comportant au moins un récipient à graines (3, 55, 86, 102) pour les graines d'ensemencement ou analogues, et plusieurs outils (18, 31, 20, 52, 109) pour amener les graines d'ensemencement dans le sol, le semoir comportant des moyens pneumatiques (10, 59, 82, 101) sous la forme d'une source de pression, par exemple un ventilateur, pour le transport des graines d'ensemencement à partir du conteneur de semence dans au moins un conduit (11, 36, 62, 70, 84, 103) vers les outils, les moyens pneumatiques étant agencés pour créer un flux d'air prenant les graines d'ensemencement depuis le réservoir de graines, le semoir comprenant une unité de distribution de graines (14, 14a, 87, 105, 110) reliée à chaque outil, comportant un disque ou un tambour ayant des ouvertures pour les graines d'ensemencement, destinée à recevoir le flux d'air et à fixer les graines d'ensemencement au disque ou au tambour de l'unité de distribution de graines, l'unité de distribution de graines (14, 14a, 87, 105, 110) étant agencée pour être mise sous pression au moyen dudit flux d'air, **caractérisé en ce que** l'unité de distribution de graines (14, 14a, 87, 105, 110) est agencée pour être mise sous pression au moyen dudit flux d'air au niveau de ladite unité via un conduit supplémentaire (25, 88), qui est branché entre ledit au moins un conduit (11, 36, 62,70, 84, 103) et chaque unité de distribution de graines (14, 14a, 87, 105, 110), pour mettre sous pression le disque ou le tambour par la portion des moyens pneumatiques (10, 59, 82, 101) qui fournit le flux d'air, et **en ce qu'**une conduite à graines (17, 39) pour acheminer les graines d'ensemencement est reliée à chaque unité de distribution de graines.

5. Un dispositif selon la revendication 4, **caractérisé en ce que** ladite mise sous pression générée au moyen d'un conduit supplémentaire (25, 88) par chaque unité de distribution de graines est réalisée de manière à maintenir les graines d'ensemencement en place, sur au moins ledit disque ou ledit tambour, respectivement.

6. Un dispositif selon la revendication 4 ou la revendication 5, **caractérisé en ce que** le conduit (11, 36, 62, 70, 84, 103) pour mélanger l'air et les graines d'ensemencement est agencé, de préférence avec des branches (62a, 62b, 70a, 70b), entre ladite source de pression et lesdites unités de distribution de graines (14, 14a, 87, 105, 110), et **en ce que** les unités de distribution de graines sont agencées en groupes, en série le long du conduit.

7. Un dispositif selon la revendication 6, **caractérisé en ce que** ledit conduit (11, 36, 62, 70, 84, 103) présente une section transversale décroissante afin de maintenir la vitesse de l'air sensiblement constante au niveau de toutes les unités de distribution de graines (14, 14a, 87, 105, 110) reliées à la source de pression.

8. Un dispositif selon l'une quelconque des revendications 4 à 7, **caractérisé en ce que** lesdites unités de distribution de graines (14, 14a, 87, 105, 110) présentent au moins une arrivée (15, 83) pour mélanger l'air et les graines d'ensemencement et au moins une arrivée (25, 88, 106), de préférence un conduit, pour que l'air réalise une pression sensiblement uniforme dans les unités de distribution de graines.

9. Un dispositif selon l'une quelconque des revendications 4 à 8, **caractérisé en ce que** lesdites unités de distribution de graines (14, 14a, 87, 105, 110) comprennent des moyens formant soupape (68, 110), tels qu'une vanne ou un papillon, qui peuvent être commandés pour régler la pression d'air voulue dans ceux-ci, et **en ce que** lesdits moyens formant soupape (110) sont de préférence conçus de manière telle qu'ils puissent être raccordés à un conduit de retour d'air, retournant l'air vers ladite source de pression.

10. Un dispositif selon l'une quelconque des revendications 4 à 9, **caractérisé en ce qu'**au moins un capteur de niveau (16) est prévue au niveau d'une desdites unités de distribution de graines (14, 14a, 87, 105, 110) pour détecter le moment où l'espace formé dans l'unité de distribution de graines est rempli de graines d'ensemencement, et où l'alimentation doit être interrompue, et où l'alimentation doit être reprise.

11. Un dispositif selon la revendication 10, **caractérisé en ce que** le semoir comprend des portions (30, 53a, 53b, 109) s'étendant dans des directions différentes avec des outils, et **en ce que** ledit capteur de niveau (16) est agencé pour détecter différents changements dans le chargement dans les différentes portions, et pour influencer l'écoulement de manière à ajuster celui-ci afin qu'un équilibre en graines d'ensemencement dans le flux de graines d'ensemencement entre des conduits de dérivation des portions soit retrouvé.
